# EUROPEAN PATENT APPLICATION

(11) **EP 2 400 202 A1**
(43) Date of publication of application: **28.12.2011**
(21) Application number: 11169853.6
(22) Date of filing: 14.06.2011
(51) Int. Cl.: F16M 11/10, G03B 21/30, G06F 3/00, H04N 5/74

(54) **Mobile stand for interactive display system**

(30) Priority: 15.06.2010 GB 1010002
(71) Applicant: Promethean Limited, Blackburn Lancashire BB1 5TH (GB)
(72) Inventor: Goodall, Robert, Blackburn BB1 5SN (GB)
(74) Representative: Williams, David John

(57) **Abstract**

There is disclosed an interactive whiteboard system (100) including a mobile stand (404), an interactive surface (102), and a projector (108), wherein the mobile stand is adapted to support the interactive surface, and wherein the mobile stand further includes a support arm (110) which extends away from the plane of the interactive surface to support a projector head of the projector in a position in front of the interactive surface, wherein the projector head is rotatable relative to the support arm between a use position in which images projected from the projector head are displayed on the interactive display surface and a non-use position in which the dimension of the system in a direction perpendicular to the plane of the interactive surface is reduced in the non-use position compared to the said dimension in the use position.

## Description

### BACKGROUND TO THE INVENTION:

### Field of the Invention:

The present invention relates to an interactive whiteboard system including a mobile stand, a display surface, and a projector, wherein the mobile stand is adapted to support the display surface, and wherein the mobile stand further includes a support arm which extends away from the plane of the display surface to support a projector head of the projector in a position in front of the interactive surface.

### Description of the Related Art:

A typical example of a system incorporating an interactive display surface is an interactive (or electronic) whiteboard system. An electronic whiteboard system typically is adapted to sense the position of a pointing device or pointer relative to a work surface (the display surface) of the whiteboard, the work surface being an interactive display surface. When an image is displayed on the work surface of the whiteboard, and its position calibrated, the pointer can be used in the same way as a computer mouse to manipulate objects on the display by moving a pointer over the surface of the whiteboard.

Interactive display systems, such as interactive whiteboards, are well-known in the art.

A typical prior art arrangement has required a projector to be installed in the ceiling of a room, at a suitable distance from the interactive display surface onto which the images are projected from the projector.

The advent of so-called short-throw projector technology has allowed for the projector to be positioned much closer to the interactive surface, such that an integrated interactive display system is possible. Such an integrated interactive display system typically is provided with a support arm extending from the plane of the interactive surface, and for example attached to the support frame on which the interactive surface is mounted. The projector may then be mounted at the end of the support arm at a distance from the interactive surface.

The provision of such an integrated interactive surface provides the possibility for a mobile integrated interactive display system, as there is no requirement for the projector to be ceiling mounted. A mobile integrated interactive display system may be desirable, as a single system may be used in multiple locations, such as multiple rooms within a building.

Whilst short throw projector technology allows for the projector to be positioned much closer to the interactive display surface, in practice the dimension of such an integrated interactive display system in a direction perpendicular to the plane of the interactive surface is too large to be accommodated in most doorways, such that it is not practical to move such a system through a doorway once assembled. This severely limits its usefulness as a mobile integrated interactive display system. The dimension in the direction parallel to the plane of the interactive display system is similarly too large to be accommodated by most doorways.

It has been proposed in the prior art to provide some means for the support arm for the projector to move relative to the interactive surface, to shorten the dimension of the integrated interactive display system in the dimension perpendicular to the plane of the interactive surface.

However projector technology has now advanced still further, to provide so-called super-short-throw projectors. This has resulted in the distance required between the projector and the interactive display surface being shortened even further, to such an extent that in many applications the dimension of the system in the direction perpendicular to the plane of the interactive surface is sufficiently short to pass through a doorway without the need for any manipulation of the support arm, providing a truly mobile interactive display system.

However, in some environments the dimension in the direction perpendicular to the plane of the interactive surface still prevents the movement of the mobile integrated interactive display system through doorways, or otherwise inhibits the movement of the mobile integrated interactive display system.

It is an object of the invention to provide an improvement to a mobile integrated interactive display system, to allow for the dimension of such a system in the direction perpendicular to the plane of the interactive surface to be reduced.

### SUMMARY OF THE INVENTION:

The invention provides an interactive whiteboard system including a mobile stand, a display surface, and a projector, wherein the mobile stand is adapted to support the display surface, and wherein the mobile stand further includes a support arm which extends away from the plane of the display surface to support a projector head of the projector in a position in front of the display surface, wherein the projector head is rotatable relative to the support arm between a use position in which images projected from the projector head are displayed on the interactive display surface and a non-use position in which the dimension of the system in a direction perpendicular to the plane of the display surface is reduced in the non-use position compared to the said dimension in the use position.

The projector head may be pivotable relative to the support arm, such that in the non-use position the projector head is tilted down in a direction toward the display surface, thereby to reduce said dimension.

The projector head may be rotatable relative to the support arm such that the dimension of the projector extending away from the plane of the display surface in the use position, is parallel to the plane of the display surface in the non-use position, thereby to reduce said dimension of the system in a direction perpendicular to the plane of the display surface.

The display surface is preferably an interactive display surface. An interactive display surface is, as known in the art, a display surface configured to detect inputs on the display surface.

The invention may further provide a mobile stand for an interactive display system, which interactive display system includes an interactive surface and a projector, wherein the mobile stand is adapted to support the interactive surface, and wherein the mobile stand further includes a support arm which extends away from the plane of the interactive surface to support a projector head of the projector in a position in front of the interactive surface, wherein the mobile stand is adapted such that the projector head is connected to the support arm so as to be rotatable relative to the support arm between a use position in which images projected from the projector head are displayed on the interactive display surface and a non-use position in which the dimension of the system in a direction perpendicular to the plane of the interactive surface is reduced in the non-use position compared to the said dimension in the use position.

The invention may further provide an integrated projection system including a frame for supporting a display surface, and a projector support arm for supporting a projector head at a position in front of the display surface, wherein the projector head is arranged to rotatably move relative to the support arm between a use position and a non-use position, such that in the non-use position the dimension of the system in the direction of the support arm is reduced compared to that dimension in the use position.

The invention may further provide a mobile stand for an electronic whiteboard system, the electronic whiteboard system including an interactive surface and a projector, wherein the mobile stand includes a support frame for supporting the interactive surface, and a support arm for supporting the projector, wherein the support arm extends from the plane of the interactive surface such that the projector is positioned in front of the interactive display surface, and wherein the mobile stand is adapted such that the projector is pivotally movable relative to the support arm between a use position and a non-use position.

### BRIEF DESCRIPTION OF THE FIGURES:

The invention will now be described by way of example with reference to the accompanying figures, in which:
Figure 1 illustrates an exemplary arrangement of a typical integrated interactive display system;
Figure 2 illustrates the implementation of the connection of a projector to a projector support arm of an integrated interactive display system in a first position in accordance with a preferred embodiment of the invention;
Figure 3 illustrates the implementation of the connection of a projector to a projector support arm of an integrated interactive display system in a second position in accordance with a preferred embodiment of the invention; and
Figure 4 illustrates an exemplary mobile integrated interactive display system in which embodiments of the invention may be utilised.

### DESCRIPTION OF THE PREFERRED EMBODIMENTS:

The invention is now described by way of reference to various examples, embodiments, and advantageous applications. One skilled in the art will appreciate that the invention is not limited to the details of any described example, embodiment or detail. In particular the invention is described with reference to an exemplary interactive display system. One skilled in the art will appreciate that the principles of the invention are not limited to such a described system.

A typical application of an interactive whiteboard system is in a teaching environment. The use of interactive whiteboard systems improve teaching productivity and also improve student comprehension. Such whiteboards also allow use to be made of good quality digital teaching materials, and allow data to be manipulated and presented using audio visual technologies.

A typical construction of an exemplary electronic whiteboard system comprises an interactive display forming the electronic whiteboard, a projector for projecting images onto the display, and a computer system in communication with the electronic whiteboard for generating the images for projection, running software applications associated with such images, and for processing data received from the display associated with pointer activity, such as the location of the pointer on the display surface. In this way the computer system can control the generation of images to take into account the detected movement of the pointer on the interactive display surface.

In known systems the pointer can be provided as a specially adapted pen, to interact with an interactive surface which is provided with appropriate input detection technology. The pen and the interactive surface may interact by electromagnetic means. Other techniques for detecting a pointer position on an interactive surface are known, such as touch sensing technology (to sense a finger input),. The present invention is not limited in its applicability to any particular input detection technology incorporated in an interactive display surface. Still further, the invention is not limited to interactive display systems incorporating an interactive display surface. Other interactive display systems are known incorporating a display surface, in which the position of a pointer on a surface is detected without the provision of an interactive surface. Camera-based technology, for example, allows the position of a pointer (pen or finger) to be located on a display surface, without the display surface being adapted to detect inputs. The cameras are positioned at the edges of the display surface to detect the location and movement of a pointer, as known in the art. Another example of a pointer-position technology in which the display surface is not interactive, i.e. not adapted to detect an input at the surface, uses infra-red technology with a specially adapted infra-red pen to detect the position of the pointer on the display surface.

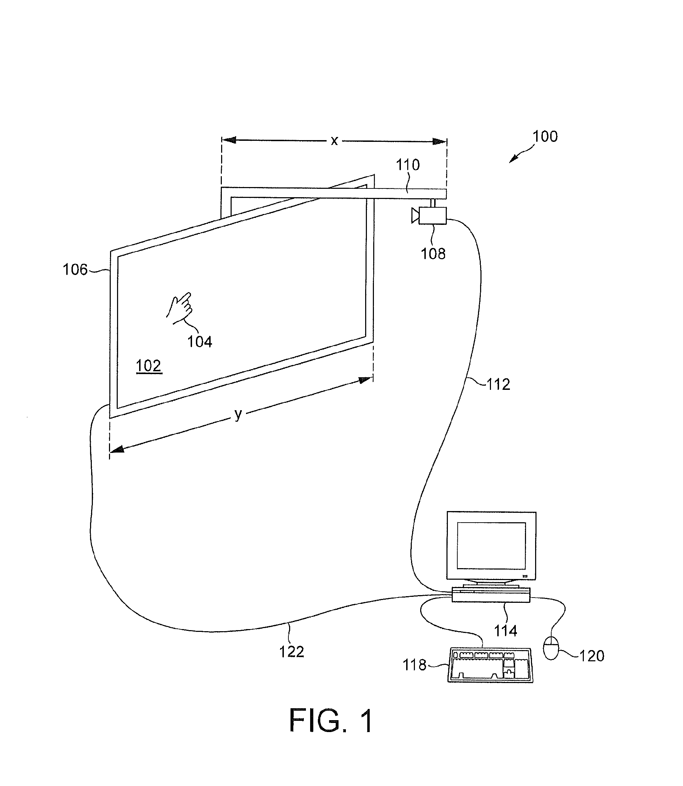

With reference to Figure 1, an exemplary integrated interactive display system 100 with reference to which the invention is described comprises: a whiteboard assembly arrangement generally designated by reference numeral 106, and including an interactive display surface 102; a projector 108, and a computer system 114. The projector 108 is attached to a support arm or boom 110, which extends in a direction away from the surface of the whiteboard 106, typically in a direction perpendicular to the plane of the whiteboard. One end of the support arm 110 supports the projector 108 in a position in front of the display surface 102, and the other end of the boom 110 is fixed to the whiteboard 106 or near the whiteboard, such as a frame associated with the whiteboard 106, or a wall on which the whiteboard 106 is mounted.

The operation of the interactive display system is not relevant to the present invention, and the operation of such system will be well-understood by one skilled on the art. However, in brief, the computer 114 controls the interactive display system. A computer display 116 is associated with the computer 114. The computer 114 is additionally provided with a keyboard input device 118 and a mouse input device 120. The computer 114 is connected to the whiteboard 106 by communication line 122 to receive input data from the display surface 102, and is connected to the projector 108 by a communication link 112 in order to provide display images to the projector 108. Although in Figure 1 these are shown as wired connections, they also may be implemented as wireless connections. Shown in Figure 1 is a pointing device 104, which is used to provide inputs at the interactive display surface 102. The pointing device 104 is illustrated as a finger of a hand. The invention is not limited in its applicability to any particular input detection technology. As is known in the art, the computer 114 controls the interactive display system to project images via the projector 108 onto the interactive surface 102, which can be referred to as an interactive display surface. The position of the pointing device 104 is detected by the interactive display surface 102, data returned to the computer 114, and location information determined by the computer 114. The pointing device 104 operates in the same way as a mouse to control the displayed images.

The projector 108 of Figure 1 may be a super-short-throw projector, which allows the length of the projector support arm 110 to be minimised. As is illustrated in Figure 1 the integrated interactive display system has a horizontal dimension of value x in a direction perpendicular to the plane of the interactive display surface, and a horizontal dimension of value y in a direction parallel or coincident to the plane of the interactive display system.

The dimension of value y in a direction parallel to the plane of the integrated interactive display system is set by the width of the interactive display surface, and is determined by the size of the display to be used. The size of the display to be used will usually be required to be sufficiently large that the dimension of value y in the direction parallel to the plane of the integrated interactive display system is too large to be accommodated in a doorway opening, and orientating the integrated interactive display system in such a way as to attempt to accommodate this dimension is not possible. Further the dimension of value y in the direction parallel to the plane of the integrated interactive display system cannot be reduced, as the interactive surface 102 cannot, for example, be folded due to the complexities of it's manufacture to allow for detection of inputs.

As discussed in the background section hereinabove, with the use of a super-short-throw projector for projector 108, the dimension of value x in a direction perpendicular to the plane of the interactive display surface can be reduced to such an extent that the integrated interactive display system can be accommodated in many doorway openings. However for some doorways openings, the dimension is still too large to allow the system to fit through the doorway.

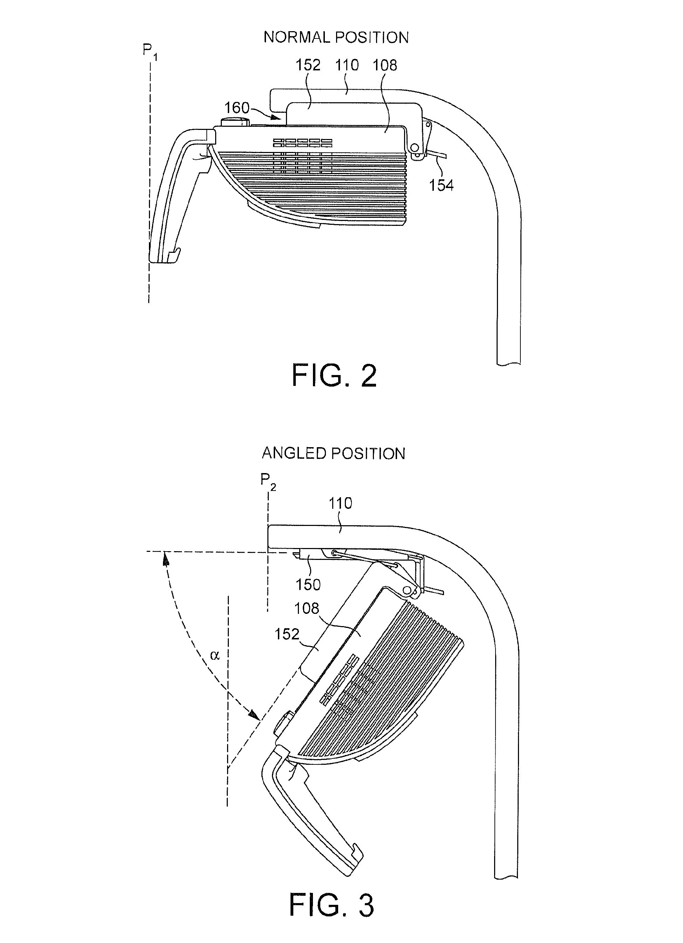

The solution to this problem is now described with reference to Figures 2 and 3.

Figures 2 and 3 illustrate the portion of the mobile interactive whiteboard system including the support arm 110 which extends away from the plane of the interactive surface to support a projector head 108 of the projector in a position in front of the interactive surface. The term projector head is used to refer to the projector mechanism from which projected images are displayed onto the interactive surface. In the arrangements shown, the projector head is the projector itself.

The system is provided with a mechanism, generally identified by reference numeral 160, which allows for the connection of the projector head to the support arm. In the example of Figures 2 and 3, it can be seen that the mechanism 160 includes a first part 150 fixed to the support arm 110, and a second part 152 fixed to the projector head 108.

The mechanism 160 fixes the projector head to the support arm such that the projector head is rotatable relative to the support arm between a use position (as illustrated in Figure 2) in which images projected from the projector head are displayed on the interactive display surface, and a non-use position (as illustrated in Figure 3) in which the dimension of the system in a direction perpendicular to the plane of the interactive surface (i.e. dimension x of Figure 1) is reduced compared to the said dimension (i.e. dimension x) in the use position.

The invention is not limited to any particular mechanism for providing the mechanism 160 and in general it is required that some mechanism be used to provide for the projector head to be attached to the support arm such that it is rotatable relative to the support arm.

In a preferred embodiment, as illustrated in Figures 2 and 3, the projector head 108 is rotatable such that it pivots relative to the support arm 110, such that in the non-use position the projector head is tilted down in a direction toward the interactive surface, thereby to reduce the dimension of the system in a direction perpendicular to the plane of the interactive surface (i.e. dimension x).

The projector head is connected to the support arm 110 such that it is pivotable about an edge or side of the projector head positioned closer to the interactive surface, so that when it pivots the opposite edge or side of the projector head pivots or swings downwardly and in a general direction toward the interactive surface, thereby to reduce the overall dimension of the system in a direction perpendicular to the plane of the interactive surface.

As can be seen in Figure 3, this results in the dimension x being reduced, such that the mobile integrated interactive display system is adapted to be able to traverse through doorways at which it would otherwise be blocked.

The projector head 108 rotates or tilts downwardly away from the support arm 110, toward the plane of the interactive surface, through an angle α, such that the extreme position of the dimension of the system in the direction perpendicular to the plane of the interactive surface is moved from a position p1 to a position p2, closer to the interactive surface, and therefore reducing said overall dimension.

In an alternative arrangement, not illustrated in the Figures, the projector head may be adapted to be rotatable relative to the support arm such that the dimension of the projector extending away from the plane of the interactive surface in the use position, is parallel to the plane of the interactive surface in the non-use position, thereby to similarly reduce said dimension of the system in a direction perpendicular to the plane of the interactive surface.

This alternative arrangement preferably requires the dimension of the projector extending away from the plane of the interactive surface in the use position to be greater than the dimension of the projector extending parallel to the plane of the interactive surface in the use position, which is typically the case with current super-short-throw projectors.

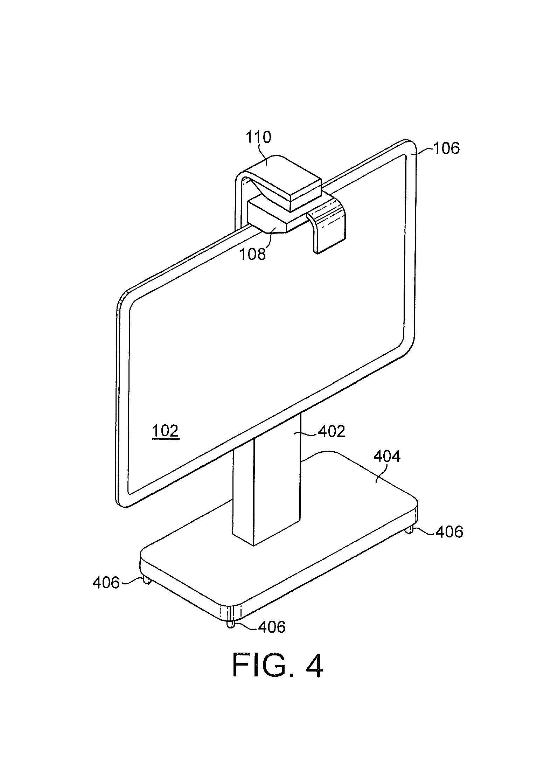

Figure 4 illustrates an exemplary mobile integrated interactive display system incorporating the implementation of the connection of a projector as illustrated in Figures 2 and 3. Like reference numerals are used to refer to elements seen in earlier figures. As can be seen in Figure 4 there is provided the integrated projector system including the electronic whiteboard 106 having a display surface 102, and a projector 108 provided on the boom arm 110. The boom arm 110 is connected to a support which extends vertically behind the electronic whiteboard 106. A stand 404 is provided having an upright support 402, on which the electronic whiteboard 106 is mounted. The stand 404 is provided with wheels 406, to allow the stand incorporating the integrated electronic whiteboard to be moved around.

It will be understood by one skilled in the art that the principles of the invention, and embodiments described herein, are not limited to any specific interactive display system. The principles of the invention and its embodiments may be implemented in any interactive display system. The invention and its embodiments applies to any type of interactive surface technology being provided for the interactive surface.

The invention and its embodiments advantageously apply to the provision of a mobile integrated interactive display system comprising an electronic whiteboard for use in an educational environment. However one skilled in the art will appreciate that the invention is not limited to an educational application. One skilled in the art will envisage other possible applications.

The invention has been described herein by way of reference to particular examples and exemplary embodiments. One skilled in the art will appreciate that the invention is not limited to the details of the specific examples and exemplary embodiments set forth. Numerous other embodiments may be envisaged without departing from the scope of the invention, which is defined by the appended claims.

## Claims

1. An interactive whiteboard system including a mobile stand, a display surface, and a projector, wherein the mobile stand is adapted to support the display surface, and wherein the mobile stand further includes a support arm which extends away from the plane of the interactive surface to support a projector head of the projector in a position in front of the display surface, wherein the projector head is rotatable relative to the support arm between a use position in which images projected from the projector head are displayed on the display surface and a non-use position in which the dimension of the system in a direction perpendicular to the plane of the display surface is reduced compared to said dimension in the use position.

2. The interactive whiteboard system of claim 1, wherein the projector head is pivotable relative to the support arm, such that in the non-use position the projector head is tilted down in a direction toward the display surface, thereby to reduce said dimension.

3. The interactive whiteboard system of claim 1, wherein the projector head is rotatable relative to the support arm such that the dimension of the projector extending away from the plane of the display surface in the use position, is parallel to the plane of the display surface in the non-use position, thereby to reduce said dimension of the system in a direction perpendicular to the plane of the display surface.
